# EUROPEAN PATENT APPLICATION

(11) **EP 1 198 147 A2**
(43) Date of publication of application: **17.04.2002**
(21) Application number: 01123301.2
(22) Date of filing: 08.10.2001
(51) Int. Cl.: H04Q 7/30, H04L 12/56

(54) **System and method of interfacing nodes in a third generation radio access network**

(30) Priority: 13.10.2000 US 687786
(71) Applicant: Telefonaktiebolaget L M Ericsson (Publ), 126 25 Stockholm (SE)
(72) Inventor: Saif, Abid Husain, Brossard, Quebec J4X 1H7 (CA); Suhail, Hasan, Redmond, WA 98052-4444 (US)
(74) Representative: HOFFMANN - EITLE

(57) **Abstract**

A General Packet Radio Service (GPRS) network and method for routing data and control messages around a failed Base Station Controller (BSC) from a Base Transceiver Station (BTS) to a Serving GPRS Support Node (SGSN). A packet network is implemented between the BSCs and BTSs in the GPRS network. Then, the BSCs are interfaced with each other through the packet network via an Iur interface; the BSCs are interfaced with the BTSs via an Iub interface; and the BTSs are interfaced with each other via a new Ixy interface. In this manner, data and control messages can be routed from any BSC or BTS to any other BSC or BTS in the packet network, routing around a failed BSC. A pointer mechanism is implemented in each BSC and each BTS in the network. When a Mobile Node (MN) moves from a first BTS to a second BTS in the network, control information is transferred from the first BTS to the second BTS using the Ixy interface. The pointer mechanism in the second BTS points to the first BTS and establishes a link between the first and second BTSs, thereby eliminating an MM update of the SGSN. During updates, media traffic continues to flow concurrently with control signaling. Uplink packet data units (PDUs) are tunneled from the BTS to the nearest GGSN by the shortest path, while the control signaling is simultaneously sent from the BTS through the BSC to the SGSN.

## Description

### BACKGROUND OF THE INVENTION

### Technical Field of the Invention

This invention relates to telecommunication systems and, more particularly, to a system and method of interfacing nodes in a third generation Radio Access Network (RAN) utilizing a packet-switched network and an Ixy interface.

### Description of Related Art

The General Packet Radio Service (GPRS) is a core packet-switching technology that may enable mobile subscribers to access packet-switched data networks such as the Internet or Local Area Networks (LANs) through an Enhanced GPRS Radio Access Network (ERAN). The Universal Mobile Telecommunication System (UMTS) is a third generation (3G) wideband Code Division Multiple Access (CDMA) technique utilized on GPRS. Radio access is provided to Mobile Nodes (MNs) in UMTS through a Universal Transmission Radio Access Network (UTRAN). The standardization group for UMTS 3G.PP has defined a new Iur interface between two different UTRAN networks utilizing a packet-based ATM transport. The purpose of this interface and associated signaling is to enable soft handoff between Radio Network Controllers (RNCs). The Iur interface, however, does not teach or suggest the interface or method of the present invention.

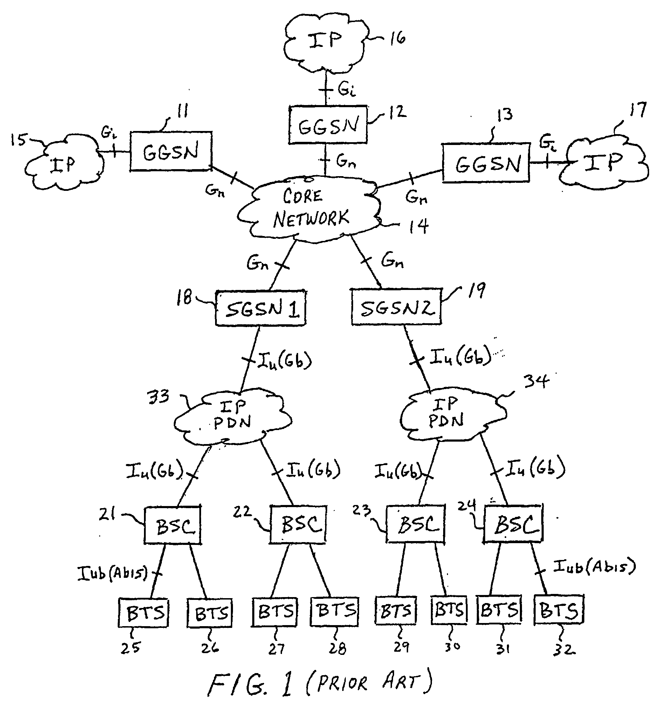

FIG. 1 is a simplified block diagram of an existing GPRS network configuration. A plurality of Gateway GPRS Support Nodes (GGSNs) 11-13 are used to interface a packet-switched core network 14 with external Internet Protocol (IP) networks 15-17. Below each GGSN in the network hierarchy, there may be multiple Serving GPRS Support Nodes (SGSNs) 18-19, and any SGSN can contact any GGSN, and vice versa. The connection between the GGSN and the SGSNs is made through the packet-switched core network over a Gn interface as defined in the GPRS specifications. Below the SGSNs in the network hierarchy, there are multiple Base Station Controllers (BSCs) 21-24, and under each BSC, there are multiple Base Transceiver Stations (BTSs) 25-32. Each of these nodes contains state information for different mobile users.

As illustrated herein, wherever a different interface is specified for UMTS and GPRS, the UMTS interface is named first, followed in parentheses by the GPRS interface. The connection between each SGSN and the BSCs below it is made through IP Packet Data Networks (PDNs) 33-34 over an Iu(Gb) interface as defined in the UMTS and GPRS specifications. The connection between each BSC and the BTSs below it is made through an Iub(Abis) interface as defined in the UMTS and GPRS specifications. The UMTS Iub interface is a packet-switched interface while the GPRS Abis interface is a circuit-switched direct connection.

There are several disadvantages to the existing network and interfaces. First, a problem arises when a BSC fails (i.e., the BSC becomes unreachable or is in a state that it cannot be repaired from a remote location). Currently, there is no methodology for automatically re-routing around a failed BSC. When a BSC becomes unreachable or is in a state that it cannot be repaired from a remote location, an alarm is sent to an Operations and Maintenance (O&M) controller, and a technician is sent to the BSC to correct the fault. All MNs in the cells controlled by the failed BSC are unreachable until the fault is corrected. It would be advantageous, therefore, to have a method of interfacing the BTSs and BSCs so that data and control messages are automatically routed around failed BSCs.

There are also network inefficiencies regarding the number of location updates that are generated and the level to which the updates are reported. The GPRS state machine includes three states: Idle, Standby, and Ready. When an MN is in the Ready state, the SGSN has to be aware of each MN's cell location. Therefore, any changes in Cell ID require that a Ready timer be restarted, and that a new Link Layer Control (LLC) frame be sent from the MN to the SGSN to ensure an updating of the Mobility Management (MM) context within the core network. The SGSN contains the MM context which includes MN cell location information, while the GGSN contains the Packet Data Protocol (PDP) context which identifies the SGSN currently serving the MN. When the MN changes SGSN's, the GGSN updates the PDP context with new SGSN information.

When an MN changes cells, an updating message is sent to the SGSN reporting the new cell location, and the SGSN updates the MM context with the new cell location information. Some cells may be as small as 50-100 meters across, and the MN may change cells often, creating a heavy signaling load on the network. Similarly, if an MN changes Routing Areas (RAs) within the same SGSN by moving from one BSC to another within its control, all data transfer has to be suspended. A new signaling LLC Packet Data Unit (PDU) is then sent from the MN to the SGSN, where the MM context is updated and a new Temporary Link Layer Identifier (TLLI) is assigned before data transfer can be resumed.

Thus, it can be seen that the user plane and the control plane are currently not separated in the ERAN portion of the GPRS network. Therefore, when the MN changes to a new BTS, and the series of context updates are performed in various nodes in the network, data transfer is interrupted and cannot be restarted until after the control signaling associated with the location change has been completed. The whole process takes a considerable amount of time (up to 3 seconds), utilizes signaling and processing resources, and causes interruptions in the data flow that are noticeable to the user. The delay caused by state machine and mobility context updates in the core network makes existing ERAN technology unsuitable for all IP-based real-time applications. It would be advantageous to have a method of interfacing the BTSs and BSCs that reduces the number of context updates that have to be performed, and separates the user plane and the control plane, thus allowing data flow to be continuous even though the control signaling is still being performed.

### SUMMARY OF THE INVENTION

In one aspect, the present invention is a GPRS network having a GGSN, an SGSN, and a radio access portion comprising a plurality of BSCs and a plurality of BTSs controlled by the BSCs. In the present invention, the plurality of BSCs and BTSs are connected to each other through a packet network that enables data and control messages to be routed from any BSC or BTS to any other BSC or BTS in the packet network. Each of the plurality of BSCs and BTSs may include a pointer-based updating mechanism for updating a Mobile Node's location when the MN moves from BTS to BTS, thereby eliminating the requirement to send an updating message to the controlling BSC and SGSN.

In another aspect, the present invention is a method in a GPRS network of routing data and control messages around a failed BSC in both directions between a BTS and an SGSN. The method includes implementing a packet network between a plurality of BSCs and BTSs in the GPRS network. Then, the plurality of BSCs are interfaced with each other through the packet network via a first packet-switched interface; the plurality of BSCs are interfaced with the plurality of BTSs via a second packet-switched interface; and the plurality of BTSs are interfaced with each other via a third packet-switched interface. In this manner, the data and control messages can be routed from any BSC or BTS to any other BSC or BTS in the packet network, routing around a failed BSC.

In another aspect, the present invention is a method of reducing the number of MM updates required to be performed by an SGSN in a GPRS network. The method includes implementing a packet network between the BSCs and BTSs in the GPRS network, and implementing a pointer mechanism in each BSC and BTS. When it is determined that an MN has moved from a first BTS to a second BTS in the network, radio resource information and control information are transferred from the first BTS to the second BTS utilizing an Ixy interface, and the pointer mechanism in the second BTS is used to point to the first BTS and establish a link between the first and second BTSs, thereby eliminating an MM update of the SGSN.

In yet another aspect, the present invention is a method in a GPRS network of enabling media traffic to continue to flow from a BTS to a GGSN concurrently with control signaling. The method tunnels uplink PDUs from the BTS to the GGSN by the shortest path based on metric hops and link bandwidths, and simultaneously sends the control signaling from the BTS through a BSC to the SGSN.

### BRIEF DESCRIPTION OF THE DRAWINGS

The invention will be better understood and its numerous objects and advantages will become more apparent to those skilled in the art by reference to the following drawings, in conjunction with the accompanying specification, in which:
FIG. 1 (Prior Art) is a simplified block diagram of an existing GPRS network configuration;
FIG. 2 is a simplified block diagram of a GPRS network that has been configured to implement the interface of the present invention;
FIG. 3 is a flow chart illustrating the steps of the present invention when implementing a packet network between BSCs and BTSs for routing of data and control messages;
FIG. 4 is a flow chart illustrating the steps of the present invention when using the packet network implemented in FIG. 4 to re-route data and control messages after the failure of a BSC;
FIG. 5 is a block diagram of a portion of a GPRS network illustrating the pointer-based updating method of the present invention;
FIG. 6 is a flow chart illustrating the steps of the present invention when using the GPRS network and pointer mechanism of FIG. 5 to eliminate mobility management (MM) updates; and
FIG. 7 is a flow chart illustrating the steps of the present invention when using the GPRS network and pointer mechanism of FIG. 5 to tunnel uplink PDUs to a GGSN while simultaneously sending control signaling through a BSC to an SGSN.

### DETAILED DESCRIPTION OF EMBODIMENTS

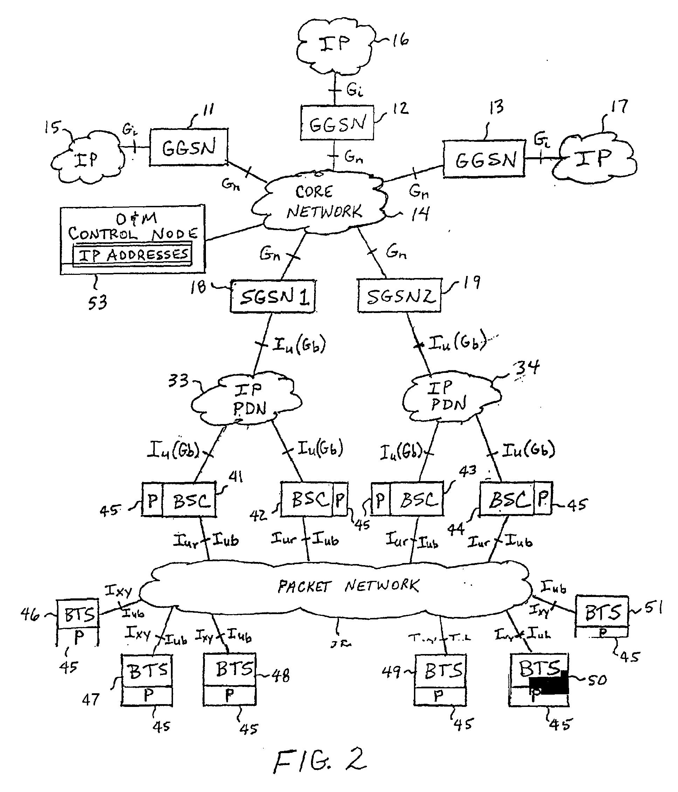

FIG. 2 is a simplified block diagram of a GPRS network that has been configured to implement the interface and method of the present invention. The upper levels of the network, from the GGSNs 11-13 down to the SGSNs 18-19 are essentially unchanged from the prior art. From the SGSNs to the BSCs, the present invention extends the UMTS UTRAN concept towards GPRS ERAN by utilizing the existing UTRAN Iu and Iur interfaces. In the architecture of the present invention, the Iu interface for UTRAN along with the Iu/Gb interface of ERAN is transported over IP instead of ATM or frame relay.

The present invention implements new signaling over the Iu and Iur open interfaces called BSC Radio Access Network Application Part (BSCRANAP) for the Iu interface, and called BSC Radio Network Server Application Part (BSCRNSAP) for the Iur interface. This signaling enhances the existing Gb interface for supporting real-time applications for cases of fast handover and O&M activities. Although similar, this new signaling is not exactly the same as the Radio Access Network Application Part (RANAP) and Radio Network Server Application Part (RNSAP) utilized in UMTS due to the inherent differences in the radio and DCH technologies.

Below the SGSNs 18-19 in the network hierarchy, there are a plurality of modified BSCs 41-44. Each BSC includes a pointer mechanism (P) 45 which is described below. The network also includes a plurality of modified BTSs 46-51. Each BTS also includes the pointer mechanism (P) 45. A packet network 52 is implemented to enable data transfer between BSCs utilizing the Iur interface. The BSCs interface with the BTSs utilizing the Iub interface. Iub is UTRAN terminology for the interface/signaling between the radio network controller and base stations. The BTSs also connect to the packet network 52, and transfer data between BTSs utilizing a new Ixy interface. The data network thus enables any BSC and any BTS to communicate with any other BSC or BTS.

The present invention introduces the Ixy interface between the different BTSs in both the UTRAN and the ERAN radio environments, along with an associated BTS Application Part (BTSAP) signaling mechanism. The Ixy interface introduces the new BTSAP signaling scheme to exchange control information over the control plane between any two BTSs. BTSAP also creates a tunnel between any two BTSs to optimize the user plane traffic path when two 3G MNs are involved in a call connection. The Ixy interface connects all the BTSs belonging to an operator, regardless of whether they belong to the same ERAN. The creation of the physical Ixy interface between the various BTSs belonging either to the same BSC or two different BSCs simply requires one routed connection.

The BTSAP signaling utilizes pointers that reference MM states and contexts that are exchanged during handover situations. The pointer mechanism 45 is introduced for maintaining mobility states and contexts between peer BTSs and between peer BSCs.

### Re-Routing After BSC Failure

As shown in FIG. 2, there may be multiple BSCs such as BSCs 41-42 connected to a single SGSN such as SGSN 18, and each BSC may control multiple BTSs. The present invention connects the BSCs together so that if one fails, traffic can be re-routed through the packet network 52 to another BSC. Physical implementation of the packet network is simple, merely requiring a router that can route information from any connected node to any other node connected to the router. Alternatively, a Virtual Private Network (VPN) may be utilized. When a BSC fails, the traffic carried by the failed BSC is re-routed through a new BSC to the BTS that is serving the MN.

The present invention also includes a new O&M control node 53 in the core network that stores network configuration information and the IP addresses of every node in the network such as BSCs and BTSs. The O&M control node is utilized with new real-time signaling to enable relocation signaling around failed BSCs. The O&M control node controls the reestablishment of the link between the BTS serving the MN and the SGSN when the intermediate BSC fails. When a BSC fails, the O&M control node is notified of the identity of the failed BSC. It sends a new GPRS Tunneling Protocol (GTP) signal to the attached SGSN indicating the BSC failure and ordering the SGSN to route around the failed BSC by using a neighboring BSC to continue user plane and control plane traffic with the BTSs belonging to the failed BSC. Since the BSC has failed, the SGSN orders the neighboring BSC to use its Iub interface to establish packet data control over all BTSs formerly controlled by the failed BSC. For signaling efficiency, each BTS controlled by a specific BSC belongs to one multicast group. A BSC Relocation-type command along with Ixy BTSAP signaling instruct the BTSs to obey commands from the new BSC.

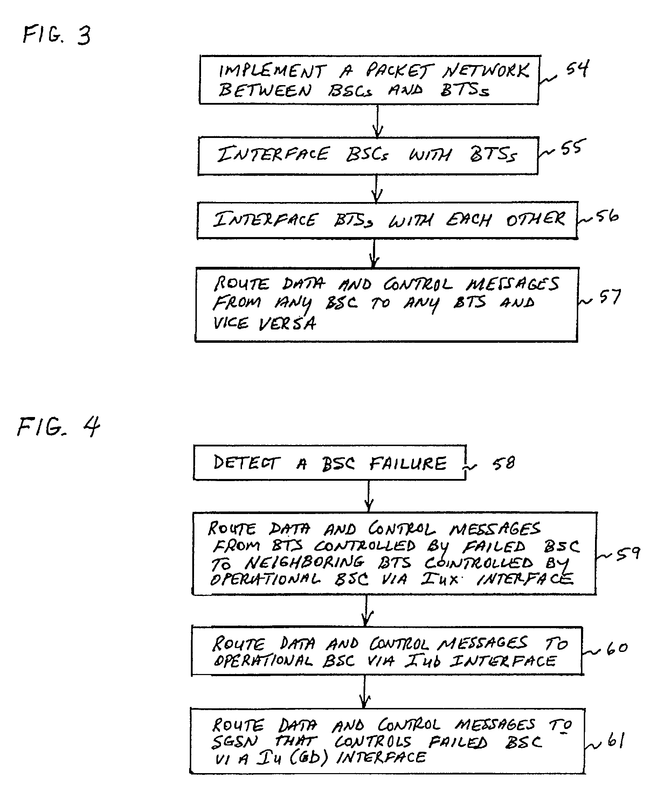

FIG. 3 is a flow chart illustrating the steps of the present invention when implementing a packet network between BSCs and BTSs for routing of data and control messages. At step 54, a packet network is implemented between the BSCs and the BTSs in the network. The BSCs are interfaced with the BTSs at step 55 using, for example, the Iub interface. At step 56, the BTSs are interfaced with each other using, for example, the Iux interface. This enables data and control messages to be routed at step 57 from any BSC to any BTS, and vice versa.

FIG. 4 is a flow chart illustrating the steps of the present invention when using the packet network implemented in FIG. 4 to re-route data and control messages after the failure of a BSC. At step 58, a BSC failure that cannot be remotely corrected is detected. The method then routes data and control messages at step 59 from a BTS that is controlled by the failed BSC to a neighboring BTS that is controlled by a different, operational BSC. This routing may be done via the Iux interface. At step 60, the data and control messages are routed from the neighboring BTS to the operational BSC. This routing may be done via the Iub interface. At step 61, the data and control messages are then routed to the SGSN that controls the failed BSC. This routing may be done via the Iu(Gb) interface.

### Efficient Mobility Management Signaling

The present invention simplifies updating of the MM state and the MM contexts in the SGSN for MNs in Ready state. In current GPRS networks, any MN in Ready state must inform the SGSN of its position at the cell level. Therefore, the MN must send an LLC PDU towards the SGSN and restart its Ready timer each time a cell change takes place. On a larger scale, any change in Routing Area, which usually means a change in BSC, requires a suspension of all data traffic while the SGSN creates a new TLLI identifier for the MN.

The present invention effectively lowers the level of authority for tracking MN cell changes from the SGSN to the BSC. The BSCs in the network then maintain information on which BTS is serving each MN, and the SGSN only maintains information regarding which BSC is serving the MN. With this shift of authority, the SGSN is only updated if the MN changes BSCs, rather than every time the MN changes cells. Each BSC maintains a Routing Area, and if the MN changes routing areas, the SGSN is updated.

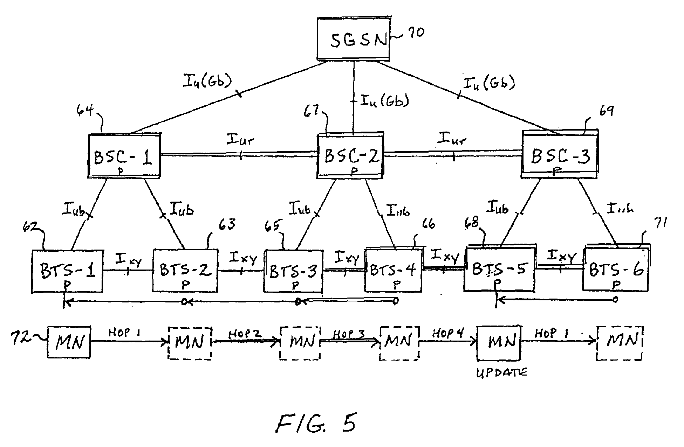

FIG. 5 is a block diagram of a portion of a GPRS network illustrating the pointer-based updating method of the present invention. The present invention uses the Ixy interface between BTSs and the Iur interface between BSCs in the pointer-based updating method. If an MN 72 moves from an old BTS (BTS-1) 62 to a new BTS (BTS-2) 63 under the control of the same BSC (BSC-1) 64, Ixy-based inter-BTS BTSAP signaling is used to transfer radio resource and other control information from BTS-1 to BTS-2. Then, instead of updating the SGSN each time the MN changes BTSs, a pointer is set up in BTS-2 referencing BTS-1 to form a link between them.

Similar to UTRAN, the BSC uses Iub signaling to control radio resources toward the MN. All information that was being transferred over the old link from BSC-1 to BTS-1 is transferred over the new link from BTS-1 to BTS-2. The link is formed using the Ixy interface and the packet network 52 linking all of the BSCs and BTSs.

The pointer link may be extended to more than one BTS in a configurable number of hops. The operator may configure the pointer to have, for example, three hops. In this case, the MN 72 can change cells three times without having to update the context information in the BSC or SGSN. When the MN moves into BTS-3 65, BTS-3 contacts BTS-2 63 to calculate how many hops the MN has taken. If the number of hops is equal to or less than the configurable number established by the operator, the pointer is set up in BTS-3, even if, as illustrated, BTS-3 is under the control of a different BSC (BSC-2) 67. Likewise, the MN can move into BTS-4 66, and a pointer is set up in BTS-4 since the MN has now taken three hops. However, if the MN moves into BTS-5 68, BTS-5 will calculate that the number of hops is greater than the configurable number established by the operator. Therefore, BTS-5 initiates an update procedure through BSC-3 69 and the SGSN 70. The MN can then move into BTS-6 71 and a pointer is once again set up to reference BTS-5.

If the MN moves from an old BTS to a new BTS under the control of the same BSC, overall radio control is still maintained by the BSC by virtue of the pointer mechanism in the old BTS redirecting all control commands to the new BTS. The process is optimized by first performing an intra-BSC handover between the old BTS and the new BTS. Uplink data traffic PDUs continue to flow from the MN through the new BTS, and because the user plane is separated from the control plane, it is no longer necessary that the uplink data traffic PDUs flow through the controlling BSC. Instead, the uplink data traffic PDUs are tunneled to the nearest gateway via the shortest path based on metric hops and bandwidth of the routed links. Downlink data traffic continues through the BSC and the original BTS, and using the pointer, is transferred over the Ixy interface towards the new BTS. Once data traffic from the new cell is stabilized, an Iub interface relocation may be performed to ensure single hop linkage between the BTS and the BSC.

If the MN moves to a BTS controlled by a different BSC, then an inter-BSC handover is performed using a GPRS ERAN bearer, and an update message is sent to the SGSN. The Iur interface first introduced in UTRAN is implemented here to allow for SRNS relocation-type traffic optimization. The new BSCRANAP signaling, along with a pointer mechanism in the BSC, are introduced to allow for BSC relocation. The BSCRANAP signaling must incorporate existing Base Station System GPRS Protocol (BSSGP) control commands used by the Enhanced Data Rates for GPRS Evolution (EDGE) along with modifying existing RNSAP commands such as the SRNS Relocation Commit command to create new commands such as a BSC Relocation Commit command. Here, the information elements must include EDGE-specific radio commands along with the pointer mechanism that refers to the new BSC.

By doing so, a handover between the two BSCs that belong to either the same SGSN or different SGSNs can first deal with the radio resource portion of the handover. If the BSCs belong to different SGSNs, the old SGSN maintains the context consisting of the old BSC. The old BSC uses pointers to refer to and control the new BSC via the Iur interface. Once handover has taken place and is stabilized, the decision to change TLLI, SGSNs, and update the PDP context in the GGSN can be done at a later stage. This process minimizes handover delays, especially in the signaling exchange that is detailed in GSM 04.07 for the intra-SGSN and inter-SGSN Routing Area Update cases. A BSC Relocation can then be performed leading to a new Iu interface along with new SGSN contexts being established.

This updating method provides increased flexibility to the network operator, and saves processing resources in the SGSN, the BSC, and the BTS. Less information is sent to the SGSN and fewer updates are performed. In addition, the present invention enables an MN that detects a stronger signal from an another cell to actively set up a pointer from the serving cell to the stronger cell, and start transferring data through the stronger cell. No mobility updates are required unless the stronger cell is controlled by a new BSC.

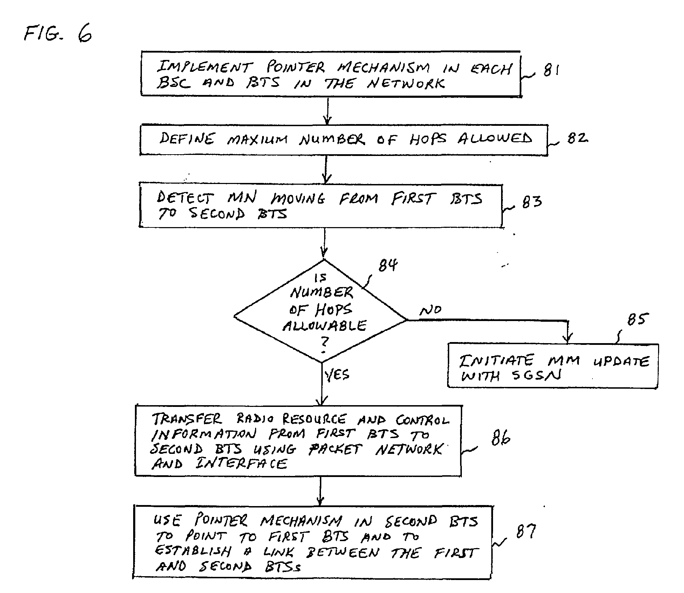

FIG. 6 is a flow chart illustrating the steps of the present invention when using the GPRS network and pointer mechanism of FIG. 5 to eliminate mobility management (MM) updates. At step 81, the pointer mechanism is implemented in each BSC and BTS in the network. A maximum number of hops allowed is defined at step 82. When an MN is detected at step 83 moving from a first BTS to a second BTS, the second BTS determines at step 84 whether the number of hops that the MN has taken is allowed. For example, if two hops are allowed, and the MN has already moved through two neighboring BTSs, then no more hops are allowed. In this case, the method moves to step 85 and initiates an MM update with the SGSN. If the number of hops has not reached the maximum number allowed, the method moves to step 86 where radio resource information and control information is transferred from the first BTS to the second BTS using the packet network and the Ixy packet interface. At step 87, the pointer mechanism in the second BTS is then used to point to the first BTS and to establish a link between the first and second BTSs.

### Separation of User Plane and Control Plane

A primary benefit of the pointer mechanism 45 is that it allows a separation between the user plane and the control plane, thus reducing the interruption sensed by the user when update signaling is required. As noted above, in current GPRS networks, the MN experiences an interruption of all data traffic while the update control signaling is being performed. This is significant since it may take up to three seconds for updates to be performed in certain cases when an MN moves into a new BTS. Industry solutions for this delay have focused on methods of reducing the time required for performing the update. The present invention, on the other hand, separates the user plane from the control plane and enables media traffic to continue in parallel with the update procedure. The update procedure can then be spread over a longer time since there is no impact on the user plane. Additionally, if a BSC fails, alternate routes are provided in such a way that the impact on the user is minimized. The separation of the user plane and the control plane allows user information (data) to continue to flow while control messages for re-routing are still being handled.

The GGSNs, such as GGSN 12, connect to external IP networks, such as IP network 16, through the Gi interface. Control information must go to the GGSN with the PDP context The BTSAP signaling implemented by the present invention optimizes cases involving 3G MNs connected to Internet based servers or clients by making the path taken by user data from the BTS to the GGSN independent from the path taken by control signaling. This is achieved by utilizing the Iub connection to the packet data network from every BTS to directly tunnel data to the nearest border gateway serving the user plane for that network.

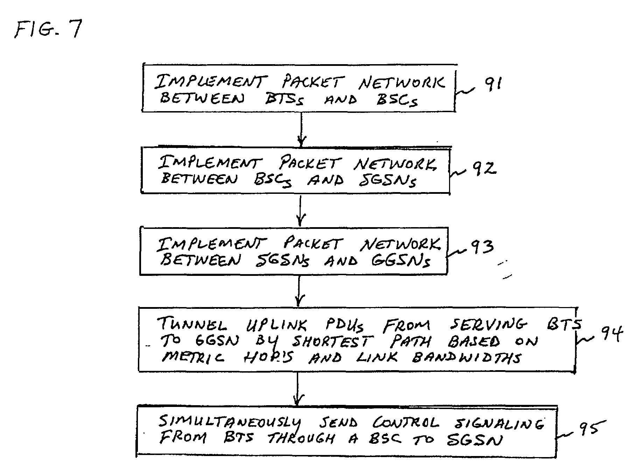

FIG. 7 is a flow chart illustrating the steps of the present invention when using the GPRS network and pointer mechanism of FIG. 5 to tunnel uplink PDUs to a GGSN while simultaneously sending control signaling through a BSC to an SGSN. At step 91, a packet network is implemented between the BTSs and the BSCs in the network. At step 92, a packet network is implemented between the BSCs and the SGSNs in the network, and at step 93, a packet network is implemented between the SGSNs and the GGSNs in the network. At step 94, uplink PDUs are then tunneled from the BTS serving the MN to the nearest GGSN by the shortest path based on metric hops and bandwidth of the routed links. Simultaneously, control signals are sent at step 95 from the serving BTS through its controlling BSC to its SGSN.

It is thus believed that the operation and construction of the present invention will be apparent from the foregoing description. While the network and method shown and described has been characterized as being preferred, it will be readily apparent that various changes and modifications could be made therein without departing from the scope of the invention as defined in the following claims.

## Claims

1. In a General Packet Radio Service (GPRS) network having a Serving GPRS Support Node (SGSN) and a radio access portion comprising a plurality of Base Station Controllers (BSCs) and a plurality of Base Transceiver Stations (BTSs) controlled by the BSCs, a method of routing data and control messages around a failed BSC from a BTS controlled by the failed BSC to the SGSN, said method comprising the steps of:
implementing a packet network between the plurality of BSCs and BTSs;
interfacing the plurality of BSCs with the plurality of BTSs through the packet network via a first packet-switched interface; and
interfacing the plurality of BTSs with each other through the packet network via a second packet-switched interface;
whereby the data and control messages can be routed from any BSC or BTS to any other BSC or BTS in the packet network.

2. The method of routing data and control messages around a failed BSC of claim 1 wherein the step of interfacing the plurality of BSCs with the plurality of BTSs via a first packet-switched interface includes interfacing the BSCs with the BTSs through an Iub interface which is used for BSC-to-BTS communications.

3. The method of routing data and control messages around a failed BSC of claim 2 wherein the step of interfacing the plurality of BTSs with each other through the packet network via a second packet-switched interface includes interfacing the plurality of BTSs through an Ixy interface which is used for BTS-to-BTS communications.

4. The method of routing data and control messages around a failed BSC of claim 3 further comprising the steps of:
detecting a BSC failure that cannot be remotely corrected;
routing data and control messages from a BTS controlled by the failed BSC to a neighboring BTS controlled by an operational BSC;
routing the data and control messages from the neighboring BTS to the operational BSC; and
routing the data and control messages from the operational BSC to the SGSN that controls the failed BSC.

5. The method of routing data and control messages around a failed BSC of claim 4 further comprising the steps of:
routing data and control messages from the SGSN that controls the failed BSC to the operational BSC;
routing the data and control messages from the operational BSC to the neighboring BTS; and
routing the data and control messages from the neighboring BTS to the BTS controlled by the failed BSC.

6. The method of routing data and control messages around a failed BSC of claim 1 further comprising the steps of:
storing in an Operations and Maintenance (O&M) control node, network configuration information and an Internet Protocol (IP) address of each BSC and BTS in the network;
notifying the O&M control node when the BSC fails;
sending a message from the O&M control node to the SGSN indicating that the BSC has failed, and ordering the SGSN to route data and control messages around the failed BSC by using a neighboring BSC to control the BTSs formerly controlled by the failed BSC.

7. The method of routing data and control messages around a failed BSC of claim 6 further comprising the steps of:
sending a message from the SGSN to the neighboring BSC to establish packet data control over all the BTSs formerly controlled by the failed BSC; and
sending a BSC Relocation command over the second packet-switched interface from the neighboring BSC to the BTSs formerly controlled by the failed BSC.

8. The method of routing data and control messages around a failed BSC of claim 7 wherein the step of sending a BSC Relocation command from the neighboring BSC to the BTSs includes multicasting the command to the BTSs as a single group.

9. The method of routing data and control messages around a failed BSC of claim 8 further comprising utilizing the third packet-switched interface by neighboring BTSs to instruct the BTSs formerly controlled by the failed BSC to obey commands from the neighboring BSC.

10. In a General Packet Radio Service (GPRS) network having a Gateway GPRS Support Node (GGSN), a Serving GPRS Support Node (SGSN), and a radio access portion comprising a plurality of Base Station Controllers (BSCs) and a plurality of Base Transceiver Stations (BTSs) controlled by the BSCs, a method of reducing a number of Mobility Management (MM) updates required to be performed by the SGSN, said method comprising the steps of:
implementing a pointer mechanism in each BSC and each BTS in the network;
determining that a Mobile Node (MN) has moved from a first BTS to a second BTS in the network;
transferring radio resource information and control information from the first BTS to the second BTS utilizing a packet network and an inter-BTS packet-switched interface; and
using the pointer mechanism in the second BTS to point to the first BTS and establish a link between the first and second BTSs, thereby eliminating an MM update of the SGSN.

11. The method of reducing a number of MM updates of claim 10 further comprising the step of enabling the MN to move to a plurality of new BTSs without performing an MM update by predefining a number of BTS hops that the MN can take before an MM update is performed.

12. The method of reducing a number of MM updates of claim 11 further comprising the steps of:
determining by a new BTS that the MN has moved from an old BTS into the new BTS; and
querying the old BTS by the new BTS to determine how many BTS hops the MN has taken.

13. The method of reducing a number of MM updates of claim 12 further comprising the steps of:
determining by the new BTS, whether the number of BTS hops taken by the MN is equal to or less than the predefined number of BTS hops;
setting up a pointer in the new BTS upon determining that the number of BTS hops taken by the MN is equal to or less than the predefined number of BTS hops; and
initiating an MM update with the SGSN upon determining that the number of BTS hops taken by the MN is greater than the predefined number of BTS hops.

14. The method of reducing a number of MM updates of claim 10 wherein the first and second BTSs are controlled by a single BSC, and the method further comprises the steps of:
routing uplink packet data units (PDUs) from the MN through the second BTS;
tunneling the uplink PDUs from the second BTS to the GGSN by the shortest path based on metric hops and link bandwidths;
routing downlink PDUs through the BSC and the first BTS; and
using the pointer to transfer the downlink PDUs over the Ixy interface from the first BTS to the second BTS.

15. The method of reducing a number of MM updates of claim 14 further comprising performing a BSC-to-BTS interface relocation once data traffic from the second BTS is stabilized in order to ensure single hop linkage between the second BTS and the BSC.

16. The method of reducing a number of MM updates of claim 10 wherein the first BTS is controlled by a first BSC, and the second BTS is controlled by a second BSC, and the method further comprises the steps of:
performing an inter-BSC handover from the first BSC to the second BSC;
sending an MM update message to the SGSN; and
using a BSC-to-BSC interface and a pointer mechanism in the second BSC to enable BSC relocation.

17. The method of reducing a number of MM updates of claim 16 further comprising the steps of:
determining whether the first and second BSCs belong to first and second SGSNs;
maintaining in the first SGSN, an MM context that indicates that the first BSC is controlling the MN, upon determining that the first and second BSCs belong to first and second SGSNs; and
using pointers by the first BSC to refer to and control the second BSC via the BSC-to-BSC interface.

18. The method of reducing a number of MM updates of claim 17 further comprising updating a Packet Data Protocol (PDP) context in a Gateway GPRS Support Node (GGSN) after the inter-BSC handover has taken place and is stabilized.

19. In a General Packet Radio Service (GPRS) network having a Gateway GPRS Support Node (GGSN), a Serving GPRS Support Node (SGSN), and a radio access portion comprising a plurality of Base Station Controllers (BSCs) and a plurality of Base Transceiver Stations (BTSs) controlled by the BSCs, a method of enabling media traffic to continue to flow concurrently with control signaling, said method comprising the steps of:
tunneling uplink packet data units (PDUs) from the BTS serving a Mobile Node (MN) to the GGSN by the shortest path based on metric hops and link bandwidths; and
simultaneously sending the control signaling from the BTS through a BSC to the SGSN.

20. In a General Packet Radio Service (GPRS) network having a Gateway GPRS Support Node (GGSN), a Serving GPRS Support Node (SGSN), and a radio access portion comprising a plurality of Base Station Controllers (BSCs) and a plurality of Base Transceiver Stations (BTSs) controlled by the BSCs, the improvement wherein the plurality of BSCs and BTSs are connected to each other through a packet network that enables data and control messages to be routed from any BSC or BTS to any other BSC or BTS in the packet network.

21. The GPRS network of claim 20 further comprising:
a packet-switched Iur interface that interfaces the plurality of BSCs with each other through the packet network;
a packet-switched Iub interface that interfaces the plurality of BSCs with the plurality of BTSs through the packet network; and
a packet-switched Ixy interface that interfaces the plurality of BTSs with each other through the packet network;
whereby the data and control messages can be routed from any BSC or BTS to any other BSC or BTS in the packet network.

22. The GPRS network of claim 21 wherein each of the plurality of BSCs and BTSs includes a pointer-based updating mechanism for updating a Mobile Node's (MN's) location when the MN moves from BTS to BTS, thereby eliminating the requirement to send an updating message to the controlling BSC and SGSN.

23. The GPRS network of claim 22 wherein the MN is receiving radio signals from a first BTS, and the MN detects a stronger radio signal from a second BTS, and wherein the pointer-based updating mechanism in the first BTS enables the MN to actively set up a pointer from the first BTS to the second BTS and to transfer data through the second BTS without performing a Mobility Management (MM) update.
